**Europäisches Patentamt**

**European Patent Office**

**Office européen des brevets**

(11) Publication number: **0 095 284**
**B1**

(12) **EUROPEAN PATENT SPECIFICATION**

(45) Date of publication of patent specification: **24.05.89**

(51) Int. Cl.⁴: **B 23 K 1/12**

(21) Application number: **83302674.3**

(22) Date of filing: **11.05.83**

(54) Tantalum bonding method.

(30) Priority: **24.05.82 US 381830**

(43) Date of publication of application:
**30.11.83 Bulletin 83/48**

(45) Publication of the grant of the patent:
**24.05.89 Bulletin 89/21**

(84) Designated Contracting States:
**DE FR GB**

(56) References cited:
**US-A-4 011 981**

(73) Proprietor: **HONEYWELL INC.**
**Honeywell Plaza**
**Minneapolis Minnesota 55408 (US)**

(72) Inventor: **Varrese, Francis R.**
**258 Mt. Pleasant Avenue**
**Ambler Pennsylvania 19002 (US)**

(74) Representative: **Votier, Sidney David et al**
**CARPMAELS & RANSFORD 43, Bloomsbury**
**Square**
**London WC1A 2RA (GB)**

Courier Press, Leamington Spa, England.

## Description

The present invention relates to tantalum bonding techniques. More specifically, the present invention is directed to a method for bonding tantalum to non-refractory materials, particularly applicable for use in the construction of pressure transducers.

The use of barrier diaphragms to separate a sensing element in pressure transducers from an input fluid has necessitated the use of materials which are substantially impervious to process fluids. One such material which has found recent acceptance in such isolation diaphragms is tantalum (Ta). While tantalum has been bonded to itself and other refractory materials, the bonding of tantalum to non-refractory materials involves a significant problem created by the very high melting point of tantalum, the low coefficient of thermal expansion of tantalum and the tenacious surface oxide found on tantalum. Accordingly, the welding of tantalum to material such as stainless steel Hastaloy C and Monel 400 has not been capable using prior art techniques of yielding sound high strength metallurgical bonds. Most of these substrate materials simply vaporize as the melting point of tantalum (3002°C) (5435°F) is achieved in welding. Furthermore, the alloys formed between these materials during welding are often brittle intrametallic compounds. The brazing of tantalum to more conventional engineering materials, e.g. stainless steel, has been hampered by tantalum's extremely low coefficient of thermal expansion, and the inability of braze alloys to break through tantalum's tenacious surface oxide.

It is an aim of the present invention to provide a method of bonding tantalum to non-refractory materials.

According to the present invention there is provided a method of bonding a tantalum layer to a non-refractory substrate having a coefficient of thermal expansion similar to that of tantalumn, comprising the steps of: providing, between overlapping areas of the tantalum layer and the substrate, an intermediate layer comprising an indium/copper/silver brazing alloy capable of wetting tantalum such that said tantalum layer can be bonded to said non-refractory layer; subjecting the composite structure to a temperature above the liquidus temperature of the intermediate layer in an inert atmosphere; and gradually reducing the temperature of the composite structure to below the solidus temperature of the intermediate layer.

An embodiment of the invention will now be described, by way of example, with reference to the accompanying drawings, in which:—

Figure 1 is a cross-sectional of a prior art structure of a tantalum diaphragm bonded to a tantalum substrate,

Figure 2 is a cross-section of a tantalum diaphragm bonded to a non-refractory substrate in accordance with the method of the present invention, and

Figure 3 is a cross-section of a pressure transducer using the material bond shown in Figure 2.

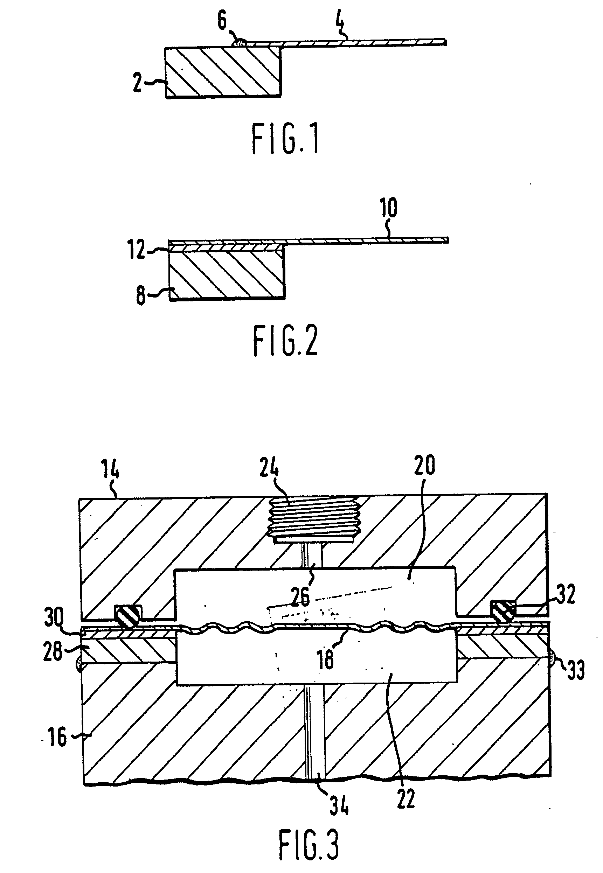

Referring to Figure 1, a tantalum substrate 2 is attached to a tantalum diaphragm 4 by an electron beam weld 6 arranged at the junction between the diaphragm 4 and the substrate 2. Such a prior art structure is inherently expensive as a result of the need for a tantalum support substrate 2. The substrate 2 may be subsequently attached to a transducer apparatus utilizing the diaphragm 4 by conventional fluid seal elements such as an O-ring seal.

Referring to Figure 2, a tantalum element 10, such as a diaphragm, is bonded to a non-tantalum and non-refractory substrate 8, by intermediate braze alloy 12. The substrate 8 is a metallic material having a coefficient of thermal expansion similar to that of tantalum and is a material which is capable of being welded to a support structure which may be of typical materials used in pressure transducer housings, e.g. stainless steel. The substrate 8 may be a nickel, cobalt and iron alloy known as Kovar made by Cartech Inc., of Reading, Pennsylvania. The braze alloy 12 must have the capability of wetting tantalum and penetrating its surface oxide, thus promoting a strong metallurgical bond, and must have the lowest melting point possible to minimize stress and distortion resulting from the remaining thermal coefficient mismatch between tantalum and Kovar. One such material is Incusil 15, a silver, copper, and indium alloy made by the Wesco Division of GTE Sylvania, Belmont, California. The braze layer 12 has a thickness of .025 to .125 mm.

The brazing cycle for attaching the tantalum to the Kovar substrate 8 is performed in an inert atmosphere, e.g. argon. The layered combination of the substrate 8, the tantalum 10 and the braze alloy 12 is initially heated to achieve the liquidus temperature of the braze alloy 12. Specifically, the liquidus range starts at 704°C while the solidus range starts at 627°C. A subsequent slow cooling of the layered structure of approximately 55.6 centigrade degrees per hour from the aforesaid liquidus to the solidus temperature produces the bond between the tantalum 10 and the Kovar substrate 8. The bonded tantalum and Kovar is retained in use below the solidus temperature of the braze alloy 12. The slow cooling allows the remaining differential expansion between the tantalum 10 and the Kovar substrate 8 to be accommodated and to prevent buckling or wrinkling of the tantalum 10 to produce a flat surface bond with the Kovar substrate 8. This bond provides a successful attachment of the tantalum 10 to the Kovar substrate 8.

In Figure 3, a transducer apparatus utilizing the bonding technique discussed above with respect to Figure 2, includes a cover 14 and a transducer housing 16 of any suitable material, e.g. stainless steel. A tantalum diaphragm 18 is arranged to divide a space 20 within the cover 14 from a space 22 within the housing 16. A fluid inlet connection 24 is provided in the cover 14 to allow the connection of a fluid inlet line (not shown). A port 26 is arranged to admit the fluid from the inlet line to the space 20 within the cover 14. The Kovar substrate is in the form of a ring 28 which is attached to the tantalum diaphragm 18 by the braze alloy 30 using the aforesaid bonding technique. The peripheral surface of the tantalum diaphragm 18 is provided with a fluid-tight seal to the cover 14 by an O-ring 32 retained in a recess within the cover 14. The cover 14 is attached to the housing 16 by any suitable means, e.g. bolts. The Kovar ring 28 is attached to the housing 16 by an electron beam weld 33 extending around the periphery of the housing 16.

A port 34 is provided within the housing 16 to connect the space 22 to fluid pressure sensing elements which may be conventional strain sensitive elements (not shown). A substantially incompressible fill fluid would be used to fill the space 22 and the port 34 to transmit a fluid pressure from the diaphragm 18 to the strain sensitive elements to provide an output signal representative of the fluid pressure applied to the transducer apparatus from the fluid inlet port 26.

## Claims

1. A method of bonding a tantalum layer to a non-refractory substrate having a coefficient of thermal expansion similar to that of tantalum, comprising the steps of: providing, between overlapping areas of the tantalum layer and the substrate, an intermediate layer comprising an indium/copper/silver brazing alloy capable of wetting tantalum such that said tantalum layer can be bonded to said non-refractory layer; subjecting the composite structure to a temperature above the liquidus temperature of the intermediate layer in an inert atmosphere; and gradually reducing the temperature of the composite structure to below the solidus temperature of the intermediate layer.

2. The method of claim 1, characterised in that said brazing alloy is Incusil 15.

3. The method of claim 1 or claim 2, characterised in that said substrate is Kovar.

4. The method of any one of claims 1 to 3, characterised in that the temperature is reduced by approximately 55.6 centigrade degrees per hour.

5. The method of any one of claims 1 to 4, characterised in that said intermediate layer has a thickness from 0.025 to 0.125 mm.

6. A pressure transducer comprising a tantalum diaphragm (18) secured to a non-refractory substrate (28) having a coefficient of thermal expansion similar to that of tantalum by means of an intermediate layer (30) comprising an indium/copper/silver brazing alloy capable of wetting tantalum which bonds the tantalum diaphragm (18) to the non-refractory substrate (28).

## Patentansprüche

1. Verfahren zum Binden einer Tantalschicht an ein nicht schwer schmelzbares Substrat mit einem ähnlichen Wärmeausdehnungskoeffizienten wie Tantal, darin bestehend, daß man stufenweise zwischen sich überdekkenden Bereichen der Tantalschicht und des Substrats eine Zwischenschicht anbringt, die aus einer Indium/kupfer/Silberhartlotlegierung besteht, welche fähig ist, Tantal zu benetzen, sodaß besagte Tantalschicht an besagte nicht schwer schmelzbare Schicht gebunden werden kann, die Verbundstruktur in einer inerten Atmosphäre einer Temperatur über der Liquidustemperatur der Zwischenschicht aussetzt und allmählich die Temperatur der Verbundstruktur bis unter die Solidustemperatur der Zwischenschicht erniedrigt.

2. Verfahren nach Anspruch 1, dadurch gekennzeichnet, daß besagte Hartlotlegierung Incusil 15 ist.

3. Verfahren nach Anspruch 1 oder 2, dadurch gekennzeichnet, daß besagtes Substrat Kovar ist.

4. Verfahren nach einem der Ansprüche 1 bis 3, dadurch gekennzeichnet, daß man die Temperatur um ungefähr 55, 6 Grad Celsius pro Stunde erniedrigt.

5. Verfahren nach einem der Ansprüche 1 bis 4, dadurch gekennzeichnet, daß besagte Zwischenschicht eine Dicke von 0,025 bis 0,125 mm aufweist.

6. Druckmeßwertwandler, bestehend aus einer Tantalmembran (18), die an einem nicht schwer schmelzbaren Substrat (28) mit einem ähnlichen Wärmeausdehnungskoeffizienten wie Tantal mittels einer Zwischenschicht (30) befestigt ist, die aus einer Indium/Kupfer/Silberhartlotlegierung besteht, welche fähig ist, Tantal zu benetzen, und die Tantalmembran (18) an das nicht schwer schmelzbare Substrat (28) bindet.

## Revendications

1. Procédé d'assemblage d'une couche de tantale à une substrat non réfractaire ayant un coefficient de dilatation thermique semblable à celui du tantale, comprenant les opérations suivantes: prévoir, entre des zones chevauchantes de la couche de tantale et du substrat, une couche intermédiaire comprenant un alliage de brasure indium/cuivre/argent à même de mouiller le tantale de telle façon que la couche de tantale puisse être assemblée à la couche non réfractaire; soumettre la structure composite à une température supérieure au liquidus de la couche intermédiaire dans une atmosphère inerte; et réduire graduellement à la température de la structure composite jusqu'à une valeur inférieure au solidus de la couche intermédiaire.

2. Procédé suivant la revendication 1, caractérisé en ce que l'alliage de brasure est de l'Incusil 15.

3. Procédé suivant la revendication 1 ou 2, caractérisé en ce que le subtrat est du Kovar.

4. Procédé suivant l'une quelconque des revendications 1 à 3, caractérisé en ce que la température est réduite d'environ 55,6°C par heure.

5. Procédé suivant l'une quelconque des revendications 1 à 4, caractérisé en ce que la couche intermédiaire a une épaisseur de 0,025 à 0,125 mm.

6. Capteur de pression comprenant un diaphragme de tantale (18) fixé à un substrat non réfractaire (28) ayant un coefficient de dilatation thermique semblable à celui du tantale, au moyen d'une couche intermédiaire (30) comprenant un alliage de brasure indium/cuivre/argent à même de mouiller le tantale, qui assemble le diaphragme de tantale (18) au substrat non réfractaire (28).

FIG.1

FIG.2

FIG.3